# EUROPEAN PATENT APPLICATION

(11) **EP 3 477 923 A1**
(43) Date of publication of application: **01.05.2019**
(21) Application number: 17198631.8
(22) Date of filing: 26.10.2017
(51) Int. Cl.: H04M 1/24

(54) **APPARATUS AND METHOD OF TESTING A CONSUMER DEVICE**

(71) Applicant: Vestel Elektronik Sanayi ve Ticaret A.S., 45030 Manisa (TR)
(72) Inventor: METIN, Duygu, 45030 Manisa (TR); GEBIZLI, Ceren (Sahin), 45030 Manisa (TR)
(74) Representative: Peel, Katherine Jane

(57) **Abstract**

There is provided an apparatus (300) for testing a consumer device comprising a piston (208) arranged to cause depression of a button (104) on a consumer device (100) having a light source (102), wherein depression of the button (102) causes a reset of the consumer device (100). The apparatus (300) comprises a controller (310) configured to detect the reset of the consumer device (100) and, in response, send a control signal to the consumer device (100) to activate the light source (104). The apparatus further comprises a sensor (204) arranged to detect light emitted from the light source (104) and, in response to detection of the light, cause actuation of the piston (208) to cause depression of the button (102).

## Description

### Technical Field

The present disclosure relates to an apparatus for testing a consumer device and a method of testing a consumer device.

### Background

The market for consumer electronic devices, including in particular mobile devices such as smartphones and tablet computers, etc., is a dynamic and fast-moving market with constant innovation and resulting new device models.

As part of the research and development lifecycle of a new device, testing of the device must be performed. Many open source and commercial mobile test automation tools/frameworks are available. Those tools offer various execution environments to perform automated tests. Powerful object engines allow testing of user interface (UI) elements automatically. Using these tools it is possible to implement test scripts and execute them on the smartphones. User actions such as swipe, drag, click and long click may be tested using these automation tools/frameworks.

### Summary

According to a first aspect disclosed herein, there is provided an apparatus for testing a consumer device, the apparatus comprising a piston arranged to cause depression of a button on a consumer device having a light source, wherein depression of the button causes a reset of the consumer device, a controller configured to detect the reset of the consumer device and, in response, send a control signal to the consumer device to activate the light source and a sensor arranged to detect light emitted from the light source and, in response to detection of the light, cause actuation of the piston to cause depression of the button.

According to an example, the apparatus comprises an enclosed body having an aperture, wherein the sensor is positioned within the body and the aperture is positioned on the body such that light emitted from a light source of a said consumer device located outside the box is detectable through the aperture.

According to an example, the apparatus comprises a timer, wherein the timer is used to set the time period that the piston causes depression of the button.

According to an example, the controller comprises a personal computer.

According to an example, the controller is configured to receive a broadcast message from the consumer device.

According to an example, the sensor is directly connected to the piston.

According to an example, the sensor is connected to the piston via a controller that control actuation of the piston.

According to a second aspect disclosed herein, there is provided a method of testing a consumer device, the method comprising depressing a button on a consumer device having a light source wherein depression of the button causes a reset of the consumer device, detecting the reset of the consumer device, in response to detecting the reset of the consumer device, sending a control signal to the consumer device to activate the light source, detecting light emitted from the light source using a sensor; and in response to detecting light emitted from the light source, repeating depressing the button.

According to an example the method comprises determining the time period for which the button is depressed.

According to an example detecting the reset of the consumer device comprises receiving a broadcast message from the consumer device.

According to an example, the consumer device is a smart phone or tablet computer.

### Brief Description of the Drawings

To assist understanding of the present disclosure and to show how embodiments may be put into effect, reference is made by way of example to the accompanying drawings in which:
Figure 1 shows schematically a rear view of a smartphone device according to an example;
Figure 2 shows schematically an apparatus for automated testing of a hard reset of a device according to an example;
Figure 3 shows schematically a test environment according to an example; and
Figure 4 schematically shows a control method according to an example.

### Detailed Description

The present disclosure has applicability to consumer electronic devices, including in particular mobile devices such as smart phones and tablet computers, but also other devices.

Testing the life expectancy of a consumer electronic device includes testing the functionality and life expectancy of the hard buttons on a device. The hard buttons of a device may be used to perform what is known as a hard reset of a device. Performing a hard reset involves pressing the hard button for a predetermined length of time to cause a reboot of the system of the device. However, automatic testing of the hard reset functionality is not possible using existing test tools and frameworks and so the testing is currently carried out manually. The currently used hard reset test may take up to 10 man-days to complete. It is desirable given the fast pace of new product introductions that the research and development lifecycles of consumer devices are as short as possible. It is therefore desirable for testing of devices to be carried out as quickly as possible.

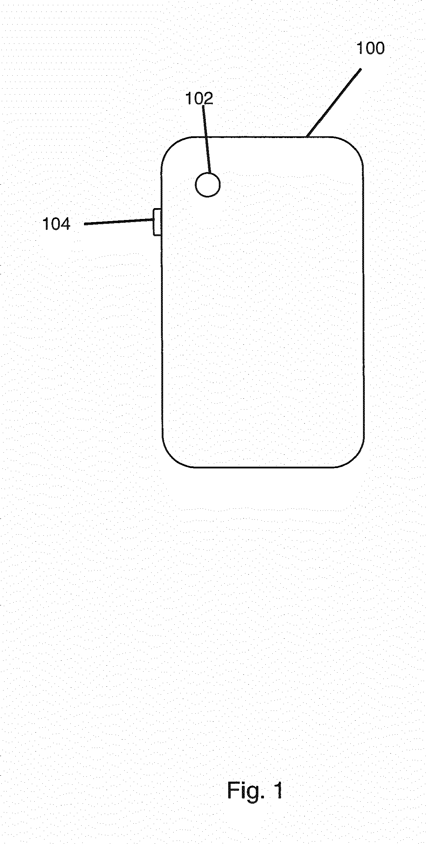

Figure 1 shows a schematic rear view of an example of a known smart phone 100. The smart phone 100 comprises a light source 102, such as a flashlight 102, and a hard button 104 which acts as the power key. The hard button 104 may be used to cause a reset of the smartphone if the hard button 104 is depressed for a given amount of time. The flashlight 102 is activated by a control signal from the smartphone control system.

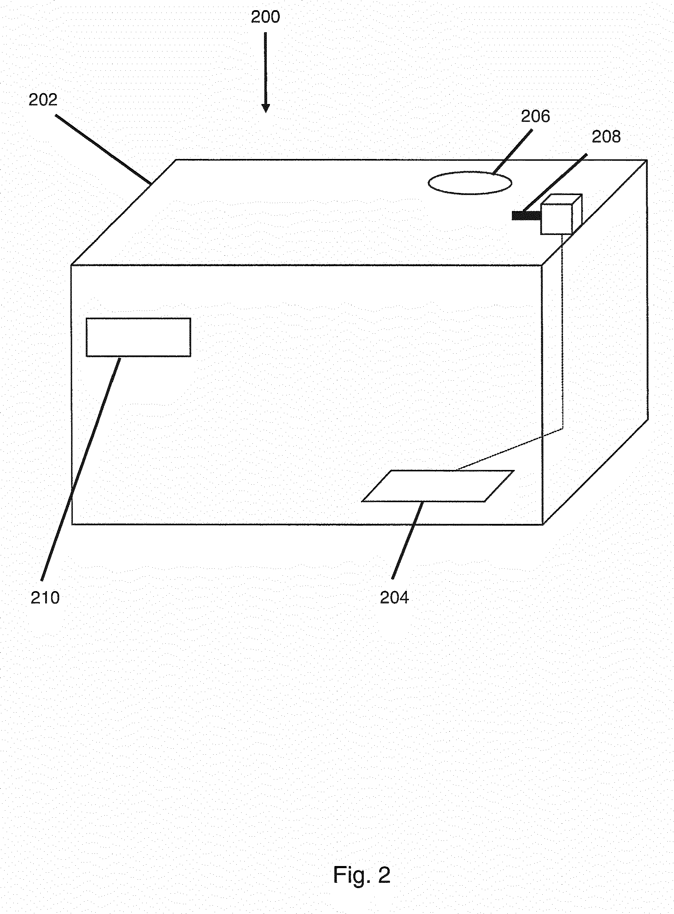

Figure 2 shows a schematic diagram of an example of an apparatus 200 for automated testing of hard reset of a device according to one embodiment. The test apparatus 200 comprises an enclosed body 202, which maybe in the form of a box or the like. The walls of the body 202 are opaque to visible light. A light sensor 204 is positioned within the body 202. The body 202 comprises an aperture 206. The apparatus 200 includes an actuatable piston 208.

The aperture 206 is positioned on the enclosed body 202 such that when a device, such as a smartphone 100 described with reference to Figure 1, is positioned on the body 202, light emitted by the light source 102 of the smartphone 100 passes through the aperture 206 into the enclosed body 202. The piston 208 is positioned such that, when the smartphone 100 is positioned on the apparatus 200 with the light source 102 aimed through the aperture 206 and when the piston 208 is actuated, the piston 208 depresses the hard button 104 on the smartphone positioned on the body 202.

The sensor 204 is connected to the actuatable piston 208 such that the control signals may be sent from the sensor 204 to the actuatable piston 208. The sensor 204 can be directly connected to the piston 208 but also could be connected via some controller or processor that controls actuation of the piston 208 following detection of light by the light sensor 208.

The apparatus 200 may also include timer 210 which enables a user to set and/or select the time for which the piston 208 depresses the hard button on the device 100. The duration is selectable since the time for which the reset button must be depressed to cause a reset of the device varies from device to device.

In use, a smartphone 100 such as that shown in Figure 1 is positioned on the body 202, as described with reference to Figure 2, such that light emitted by the light source 102 is directed through the aperture 206 and the piston 208 can depress a hard reset button 104 positioned on the smart phone 100.

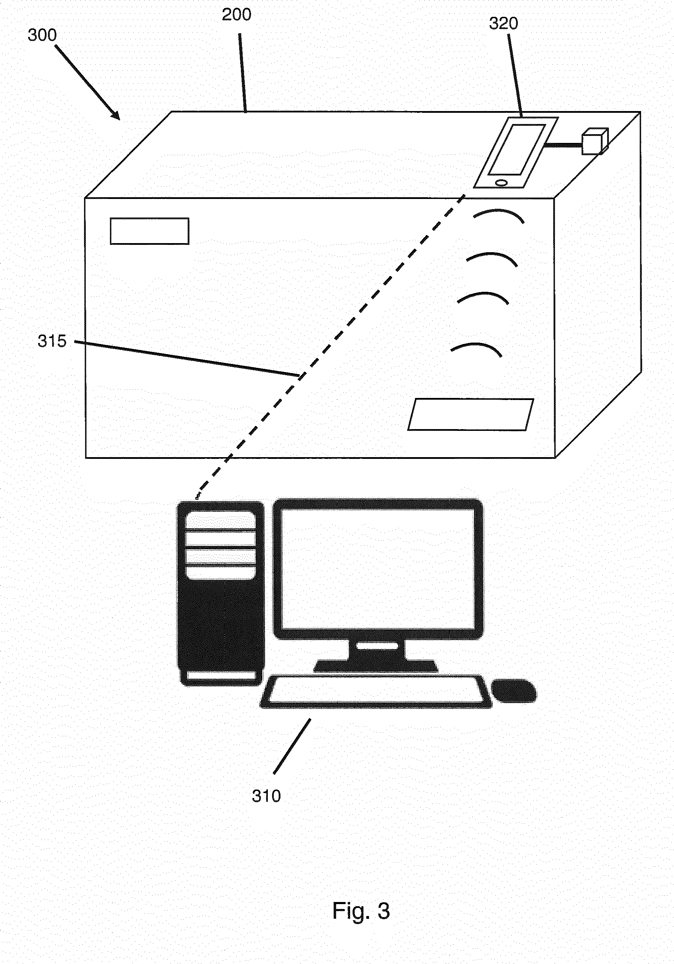

Figure 3 shows a test environment 300 according to an embodiment. The environment shown in Figure 3 includes a test apparatus 200 and a personal computer (PC) 310. Although the PC 310 is shown as the controller in this example, any suitable control system may be used. Smart phone 320 is positioned on the test apparatus 200 as described with reference to Figure 2. The smart phone 320 may be the same as the smartphone described with reference to Figure 1. PC 310 is used to control the test environment.

Smartphone 320 is connected to the PC 310 via a data cable 315. The PC 310 executes test scripts to trigger the hard reset test of the smart phone 320. The PC 310 sends control signals to, and receives information from, the smartphone 320.

The PC 310 also sends control signals to the actuatable piston 208 of the apparatus 200.

In use, a test script is executed on the PC 310 which causes the reset test to begin. The actuatable piston 208 receives a control signal from the PC 310 to depress the hard reset button of the smart phone 320. The piston 208 depresses the hard reset button for a given amount of time, resulting in a reset of the phone 320. The amount of time for which the piston 208 depresses the reset button may be selected by the user using the timer 210, set at the PC 310 and/or predetermined by the test script.

Once the smart phone 320 undergoes a reset, the smartphone 320 broadcasts a BOOT_COMPLETED message which is received at the PC 310. In the test script executed at the PC 310 there exists a broadcast receiver service to grab the BOOT_COMPLETED message of the smart phone 320. The PC 310 thus detects the reboot process and triggers the test script to turn on the light source 104 of the smartphone 320.

The sensor 204 detects the light emitted from the light source 104 and triggers the piston 208 to depress the hard rest button and cause a reset, thereby continuing the reset test process.

The process continues until the system finds a bug, or until the operator determines that sufficient reboot tests have been performed to test the life expectancy of the hard reset button.

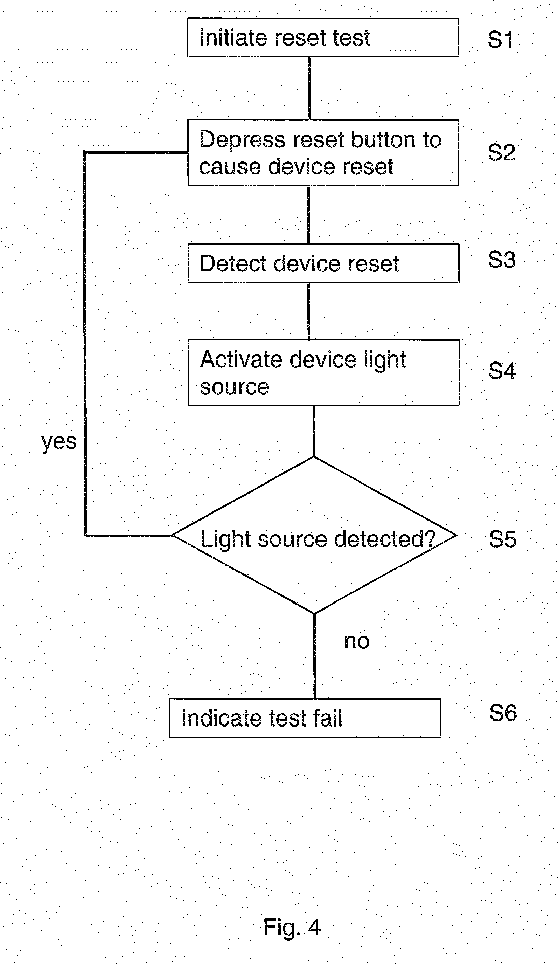

Figure 4 shows a control method according to an example.

At S1, the reset test is initiated.

At S2, the piston is actuated and depresses the reset button on the mobile device for a set period of time to cause the device to reset

At S3, the reset of the device is detected.

At S4, the device light source is activated.

At S5, it is determined whether the light source is detected. If the light source is detected, the process returns to S2 and the rest button is depressed to cause a reset.

At S6, if the light source is not detected, an indication that the test has failed may be given.

The described apparatus and control method provide an automated hard reset button test for a device such as a smartphone. The described apparatus and control method provide an automated method to mechanically test operation of the hard reset button and also obtain confirmation that the reset has been fully completed by triggering operation of the light source of the device following a reset.

Although the method and apparatus have been described in relation to a smartphone with a flashlight, any consumer electronic product having a hardware button to reset the device and a light source which can be activated and deactivated. For example, television sets, set-top boxes and modems may be suitable for testing according to the method described herein.

It will be understood that the processor or processing system or circuitry referred to herein may in practice be provided by a single chip or integrated circuit or plural chips or integrated circuits, optionally provided as a chipset, an application-specific integrated circuit (ASIC), field-programmable gate array (FPGA), digital signal processor (DSP), graphics processing units (GPUs), etc. The chip or chips may comprise circuitry (as well as possibly firmware) for embodying at least one or more of a data processor or processors, a digital signal processor or processors, baseband circuitry and radio frequency circuitry, which are configurable so as to operate in accordance with the exemplary embodiments. In this regard, the exemplary embodiments may be implemented at least in part by computer software stored in (non-transitory) memory and executable by the processor, or by hardware, or by a combination of tangibly stored software and hardware (and tangibly stored firmware).

Although at least some aspects of the embodiments described herein with reference to the drawings comprise computer processes performed in processing systems or processors, the invention also extends to computer programs, particularly computer programs on or in a carrier, adapted for putting the invention into practice. The program may be in the form of non-transitory source code, object code, a code intermediate source and object code such as in partially compiled form, or in any other non-transitory form suitable for use in the implementation of processes according to the invention. The carrier may be any entity or device capable of carrying the program. For example, the carrier may comprise a storage medium, such as a solid-state drive (SSD) or other semiconductor-based RAM; a ROM, for example a CD ROM or a semiconductor ROM; a magnetic recording medium, for example a floppy disk or hard disk; optical memory devices in general; etc.

The examples described herein are to be understood as illustrative examples of embodiments of the invention. Further embodiments and examples are envisaged. Any feature described in relation to any one example or embodiment may be used alone or in combination with other features. In addition, any feature described in relation to any one example or embodiment may also be used in combination with one or more features of any other of the examples or embodiments, or any combination of any other of the examples or embodiments. Furthermore, equivalents and modifications not described herein may also be employed within the scope of the invention, which is defined in the claims.

## Claims

1. An apparatus for testing a consumer device, the apparatus comprising:
a piston arranged to cause depression of a button on a consumer device having a light source, wherein depression of the button causes a reset of the consumer device;
a controller configured to detect the reset of the consumer device and, in response, send a control signal to the consumer device to activate the light source; and
a sensor arranged to detect light emitted from the light source and, in response to detection of the light, cause actuation of the piston to cause depression of the button.

2. An apparatus according to claim 1, comprising an enclosed body having an aperture, wherein the sensor is positioned within the body and the aperture is positioned on the body such that light emitted from a light source of a said consumer device located outside the box is detectable through the aperture.

3. An apparatus according to any preceding claim, comprising a timer, wherein the timer is used to set the time period that the piston causes depression of the button.

4. An apparatus according to any preceding claim, wherein the controller is a personal computer.

5. An apparatus according to any preceding claim, wherein the controller is configured to receive a broadcast message from the consumer device.

6. An apparatus according to any preceding claim, wherein the sensor is directly connected to the piston.

7. An apparatus according to any one of claims 1 to 5, wherein the sensor is connected to the piston via a controller that control actuation of the piston.

8. A method of testing a consumer device, the method comprising:
depressing a button on a consumer device having a light source wherein depression of the button causes a reset of the consumer device;
detecting the reset of the consumer device
in response to detecting the reset of the consumer device, sending a control signal to the consumer device to activate the light source;
detecting light emitted from the light source using a sensor; and
in response to detecting light emitted from the light source, repeating depressing the button.

9. A method according to claim 8, comprising
determining the time period for which the button is depressed.

10. A method according to claim 8 or claim 9, wherein detecting the reset of the consumer device comprises receiving a broadcast message from the consumer device.

11. A method according to any one of claims 8 to 10, wherein the consumer device is a smart phone or tablet computer.
